# EUROPEAN PATENT APPLICATION

(11) **EP 1 408 602 A1**
(43) Date of publication of application: **14.04.2004**
(21) Application number: 01943554.4
(22) Date of filing: 25.06.2001
(51) Int. Cl.: H02K 29/08, G01P 3/487

(54) **ELECTRONIC CONTROL DEVICE FOR WINDOW OPENERS AND OTHER MOTOR-ACTIVATED MECHANISMS**

(71) Applicant: Grupo Antol N-Ingenier A, S.A., 09007 Burgos (ES)
(72) Inventor: PROANO VICENTE, César, E-09006 Burgos (ES)
(74) Representative: Urteaga Simarro, José Antonio
(86) International application number: PCT/ES2001/000253
(87) International publication number: WO 2003/001652

(57) **Abstract**

Electronic control device for window-winders and other motor-driven mechanisms, with a motor (2) fitted with magnetic field sensors near its magnetic ring (8), that uses magnetic field concentrators to take the magnetic field from the interior of the motor to the sensors.

## Description

The invention consists of electronic control devices for window-opening systems driven by an electric motor for motor vehicles, although it can be directly applied to any other technology that requires the turning speed or the position of a rotor or rotating part to be measured. Specifically, the invention refers to the way in which the electronic device measures the rotation speed of the motor; and consequently the way in which the electronic device is inserted into the motor itself

The rotation speed of the motor of a window-winder is currently measured using one or two Hall-effect sensors located opposite a magnetic ring set inside the rotor of the motor itself. These sensors are sensitive to the rotary magnetic field created by the aforementioned magnetic ring. They are located at a very small distance from it and produce signals that are processed by the electronic control device of the window-winder.

The electronic control device of the window-winder is normally located in a case outside the window-winder, or alternatively is integrated within the motor of the window-winder, or in a module inserted in the motor of the window-winder.
1. In the first case, the Hall sensors are located inside the motor and there are connection wires between the external electronic device and the motor, to power the sensors and receive their output signals, as well as powering the motor itself.
2. In the second case, since the electronic device is in the interior of the motor, the Hall sensors are fitted on the board of the electronic device, and opposite the ring of the rotor and at a small distance from it.
3. The third case is similar to the second case: the Hall sensors are fitted on the electronic board. The difference is that the two parts, motor and electronic, are open and are coupled to each other to form a single component.

If we view the window-winder and its control device as a complete system, we see that the arrangement with internal sensors and external electronics (see I above) represents an additional cost, since it requires intermediary connectors and cables. In addition, this type of arrangement complicates assembly inside the vehicle, resulting in additional manufacturing costs and problems related to quality and reliability.

Arrangement 2, on the other hand, involves considerable drawbacks in terms of geometric definition of the motor. A motor with integrated electronics has a fixed definition and is very inflexible. As a result, it is very costly to adapt it to performance or specifications differences that affect the motor or the electronics. Furthermore, in models with different performance levels amongst window-winders, motors with electronic control and electric motors with no control may be required, and this cannot be achieved with a motor with integrated control electronics.

In arrangement 3, where an electronic module is inserted in the motor, the limitation is that the opening in the motor for the electronic module to be inserted is too large for the electronic board to be inserted with the sensors and the electric terminals. This means that the two parts, the electronic module and the motor, are not geometrically independent, but need to be defined jointly.

It also has to be taken into account that, in general, conventional motor units and, where applicable, the electronic components, are normally located in costly compact units. Thus, when, in a given assembly, there are variations in the operating practise of the different door elements to be controlled such as window-winders, anti-nip or anti-trapment systems, external rear-view mirrors, etc., it is sometimes impossible to use these conventional units.

In this context, elements of high magnetic permeability that serve to concentrate and direct the magnetic field created through a rotating magnetic element to magnetic sensors are defined as "field concentrators".

The shape of the magnetic flow lines produced by a magnetic ring, and the position normally occupied by the magnetic sensors must always be very close to that of the ring, in order for them to operate correctly.

The invention establishes that in electric window-winders with electronic control devices that measure the position and/or turning speed of the motor, field concentrators can be used to direct and concentrate the magnetic flow lines from the magnetic ring of the motor to the sensors of the electronic device.

The "field concentrators" in the invention can be located in different positions, i.e., from the magnetic ring to the magnetic sensors, which can continue operating correctly even if they are located at a large distance from the ring and whatever direction they are oriented in.
Arrangement A: Field concentrators in the motor and the electronic module.
Arrangement B. Field concentrators in the motor only.
Arrangement C. Field concentrators in the electronic module only.
Arrangement D. Field concentrators between the motor and the electronic module.

The invention establishes different types of geometric interface between the motor and the electronic module, as a result of these different arrangements of the field concentrators.

In Case A, field concentrators are used inside the motor and also inside the electronic device; thus within the motor, the field concentrators direct the magnetic flow from the magnetic ring to the exterior of the motor and inside the electronic device, the field concentrators direct the magnetic flow from the exterior of the device to the magnetic sensor or sensors used.

In addition, an electrical and magnetic connection is made between the motor and the electronic device with the following characteristics:

In the connection area between the motor and the electronic device, the field concentrators of the two sides, motor and electronic, must remain opposite each other, making a magnetic connection so that the intensity of the magnetic flow is not lost.

Similarly, there will be an electrical connection, by means of physical contact, allowing the motor to be powered from the electronic device through two terminals or contacts.

There is an interface between the motor and the electronics with the following characteristics:

The electric motor and electronic module will be two closed and independent components, allowing the same motor to be used with different electronic modules, or vice versa: i.e. using the same electronic module in different and couplable motors.

The electronic device is secured to the motor by means of the electrical and magnetic connector, defined in the section above, so that the electric terminals are in contact and there is a magnetic coupling between the field concentrators of the two elements.

The invention allows the electric terminals of the motor to be coupled to an additional detachable part that acts as an external connector, and as a result the motor defined in the invention could be used as a simple conventional electric motor, without any electronic control.

In Case B, where the invention establishes the use of field concentrators only in the interior of the motor, the field concentrators direct the magnetic field generated from the rotor to the exterior of the motor.

Similarly, the electrical and magnetic connection between the motor and the electronic module has the following characteristics:

The magnetic sensor or sensors located in the interior of the electronic module will be located near the motor so that they are affected by the action of the field concentrator(s).

Electrical connection is by means of two terminals located in the motor to which another two terminals - located in the electronic module - are coupled, as in the previous arrangement.

The invention establishes an interface between the motor and the electronics with the following characteristics:

The electric motor and electronic module are two closed and independent components. This allows a single motor to be used with different electronic modules, or vice versa; i.e. using the same electronic module in different, couplable motors.

The electronic device is secured to the motor by means of the electrical and magnetic connector, defined in the apparatus above, so that the electric terminals are in contact and there is a magnetic coupling between the field concentrators of the motor and the sensors.

The electric terminals of the motor can be coupled to an additional detachable part that acts as an external connector, and as a result the motor defined in the invention could be used as a simple conventional electric motor.

In Case C, where field concentrators are only used in the electronic module, these field concentrators direct and concentrate the magnetic field from the area near the rotor towards the sensor or sensors, with an electrical and magnetic connection between the motor and the electronic module with the following characteristics:

The field concentrators must be located very close to the rotor, so that they are affected by the action of the magnetic field generated by the magnetic element of the rotor.

In order to achieve a suitable level of magnetic flow in the field concentrators of the electronic device, the motor can have a small opening through which the electronic module and its field concentrators are introduced into the motor.

As in the cases above, electrical connection is by physical contact, using terminals, which in the case of the motor with the external opening, are located in the area of the opening.

This arrangement can be used in the case of an open and geometrically couplable motor and electronic device, with an interface between the motor and electronics which has the following characteristics:

The interconnection between the motor and the electronic device must be such that the two elements are electrically and magnetically connected - electrically by means of terminals and magnetically by means of field concentrators.

This interconnection, in turn, must close the assembly formed by the two motor elements and the electronic device.

At the same time, it allows an additional detachable part to be connected to the electric terminals of the motor: this acts as an external connector and also closes the motor, meaning that the motor as defined in the invention could be used as a simple conventional electric motor.

In Case D, field concentrators are used between the motor and the electronic device when the two are at a certain distance from each other, in which the field concentrator(s) are used to direct the field from the motor to the electronic device.

The invention establishes an electrical and magnetic connection between the motor and the electronic device with the following characteristics.

One end of the field concentrators must be placed within the area of action of the magnetic field generated by the magnetic element of the rotor, while the other end must be placed close to the magnetic sensor(s) of the electronic module.

Similarly there are tracks or wires that provide an electrical power connection to the motor from the electronic device.

This arrangement can be used when the motor and the electronic module are two closed, separate and independent modules, with an interface between the motor and the electronics with the following characteristics:

The electronic device is connected to the motor by means of an electrical connection, tracks or wires, and by means of a magnetic connection provided by field concentrators.

The invention also allows the electric terminals of the motor to be coupled to an additional detachable part that acts as an external connector, and as a result the motor defined in the invention could be used as a simple conventional electric motor, without any electronic control.

The innovation of this technique lies in the fact that the sensor element of the magnetic field and the element generating the field may be separated in the rotor, allowing new types of interface between the motor and the power electronics with better performance and at less cost than arrangements currently on the market.

In Case A, and B, it should be noted is the most flexible arrangement, since it allows the same motor to be used in different models of vehicles, even if different electronic devices are required. This results in a reduction in the cost of the complete device as a result of economies of scale and logistics.

It allows the same electronic device to be used in different models of vehicles, even if geometrically different motors are required. This results in a reduction in the cost of the complete device as a result of economies of scale and logistics.

It also allows the supplier of the motor and the supplier of the power electronics to be selected independently, which means that the most suitable one can be selected for each specific vehicle model.

Another advantage of this type of arrangement is that the motor is capable of operating independently of the electronic device, making checking during the production process of the window-winder simpler, and simplifying the development and validation stages.

The arrangement with open motor and electronics, coupled geometrically, offers the advantage over those currently on the market, that a much smaller opening is needed for inserting the electronic module in the motor. At present, the module is housed with the sensors, whereas in this arrangement, only the field concentrator(s) would be introduced.

The variation with independent and separate motor and electronics, Case D, has the advantage that only two power wires or tracks to the motor are required and one or two field concentrators between the two, compared to conventional arrangements which require six wires or tracks.

This all results in a considerable reduction in the cost of wiring and connectors.

In all the variations proposed by the invention, the same motor may be used with and without electronic control. In the first case, the corresponding electronic device is incorporated into the motor, and in the second case, the additional detachable part or appropriate connector is inserted into the motor, resulting in a reduction in the cost of the entire assembly of the two products, and of the investments required.

This is all shown in detail in the enclosed drawing sheets, as follows:
Figure 1 shows the known arrangement of an electronic module outside the motor.
Figure 2 shows another known arrangement in which an electronic module is integrated into the motor.
Figure 3 shows another known arrangement with an electronic module which can be inserted into the motor.
Figure 4 is a known representation of the relative position between a magnetic ring and the magnetic sensors.
Figure 5 shows the bases of the invention in which the magnetic sensors are physically distanced from the magnetic ring with the provision of field concentrators.
Figure 6 shows an arrangement of the invention with the field concentrators inside the motor and inside the electronic module.
Figure 7 shows the electronic motor referred to in Fig. 6
Figure 8 shows another alternative arrangement of the invention in which the field concentrators are located only inside the motor.
Figure 9 shows the electronic motor mentioned in Fig. 8.
Figure 10 shows the variation of the invention in which the field concentrators are located only inside the electronic module.
Figure 11 shows the electronic motor referred to in Fig. 10.
Figure 12 shows the variation of the invention in which the field concentrators are located between the motor and the electronic module.
Figure 13 is a general representation of Fig. 12.

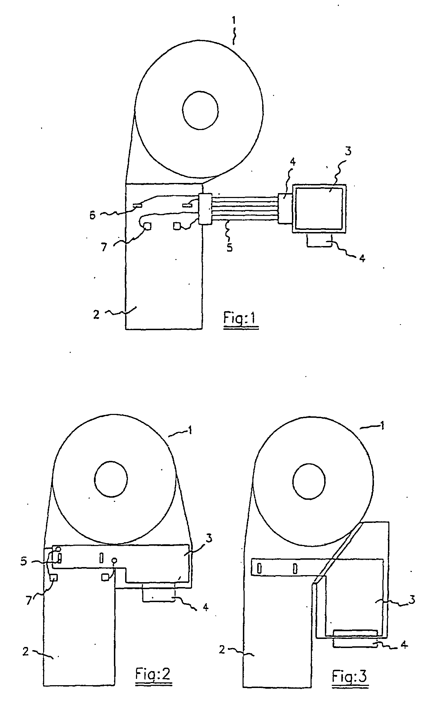

In the case of Figs. 1 to 3, these known arrangements (1), consists of a motor (2) with the sensors (6), brushes (7)... etc., and an electronic module (3) with its connectors (4). In the first case, Fig. 1, the electronic module (3) is located outside the motor, in a box for example, and the Hall sensors (6) are arranged inside the motor, with connection wires (5) between the two to power the sensors.

In the second case, Fig. 2, the electronic device (3) is inside the motor and the Hall sensors (6) are mounted on the board of the electronic device.

In the third case, Fig. 3, the Hall sensors are also fitted on the electronic board, and the motor and electronics are open and are coupled together to form a single component.

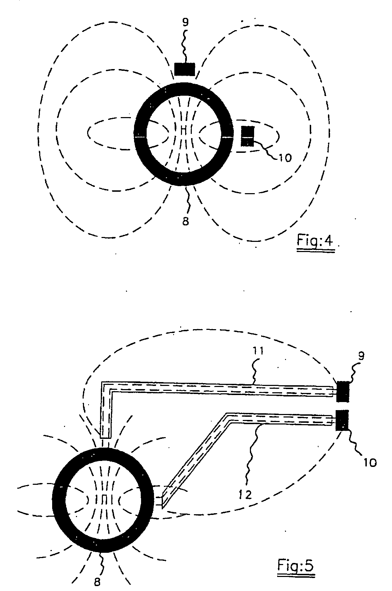

In Fig. 4, we can see the known shape of the magnetic flow lines produced by a magnetic ring (8) and the proximity of the sensors (8, 9) to this ring for proper operation.

In Fig. 5, we see the layout of the field concentrators (11, 12) which direct the magnetic flow lines from the ring (8) to the magnetic sensors (9, 10), so that the latter can operate correctly even if they are located at a great distance from the ring (8) and regardless of the direction they are oriented in.

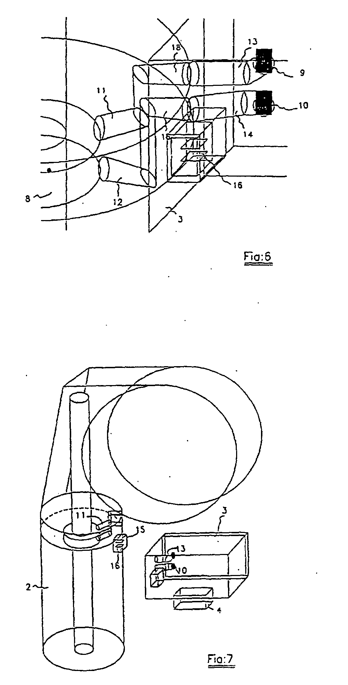

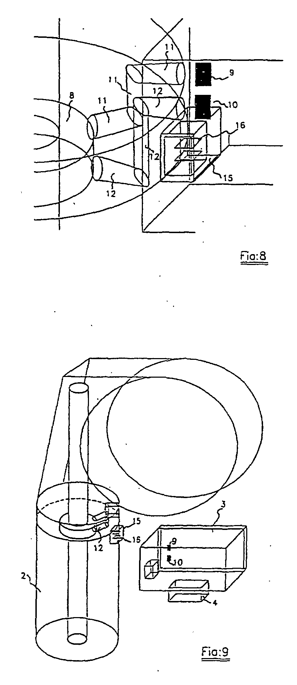

In Figs. 6 and 7, we see the field concentrators (11, 12) inside the motor (1, 2) and concentrators (13, 14) inside the electronic module (3). The magnetic flow from the ring (8) is directed to the exterior of the motor (2) and inside the electronic device (3), the concentrators (13, 14) direct the flow from the exterior to the sensors (9, 10).

We can also see how an electrical and magnetic connection (18) is made between the motor and the electronic device. The motor and the electronic device are two closed and independent components, and the latter is secured to the motor (2) by means of the electrical and magnetic connector. The electric terminals (16) are in contact.

In Figs, 8 and 9, the field concentrators (11, 12) are inside the motor and direct the magnetic field generated from the rotor to the exterior of the motor (2).

The sensors (9, 10) of the electronic module (3) remain close to the motor and remain under the influence of the concentrators (11, 12), with an electrical connection made by the two terminals (16) of the motor which are coupled to another two in the electronic module (3).

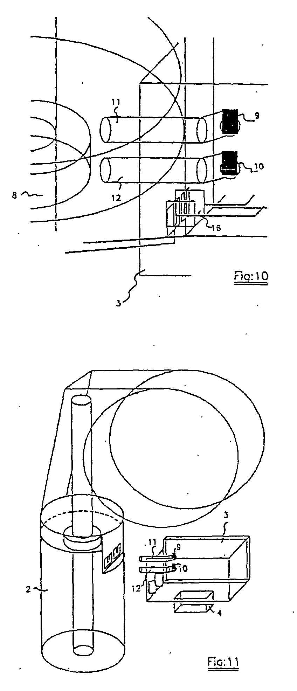

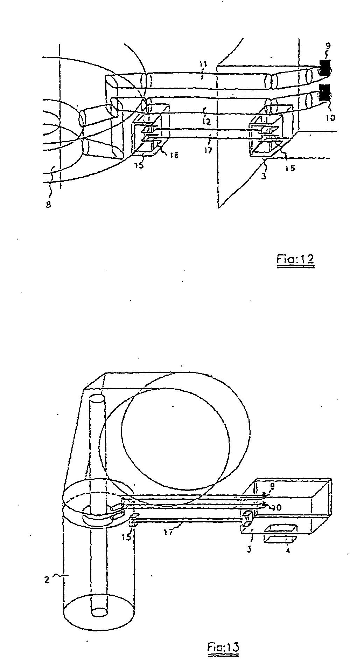

In Figs. 10 and 11, the field concentrators (11, 12) are established only in the electronic module (3). In this case, the motor (2) has an opening through which the module (3) and its field concentrators are introduced.

In Figs. 12 and 13, we can see how the field concentrators (11, 12) are situated between the motor (2) and the electronic module (3) when there is a certain distance between the two, with tracks or wires (17) that provide an electrical power connection to the motor from the device.

## Claims

1. Electronic control device for window-winders and other motor-driven mechanisms (2), whose movement is controlled by means of an electronic module (3), which measures the position and/or the turning speed of the motor by means of magnetic sensors (9, 10) - Hall effect, for example - located opposite a magnetic ring (8) housed in the rotor of the motor. These sensors are located a small distance from it, and provide signals that are processed by the electronic control device (3) of the various elements, in which this electronic device may be located either in an external box, or be integrated inside the drive motor, either stably or coupled to the motor through an opening in the body of the motor. The device is **characterised by** the fact that it uses a motor (2) without magnetic field sensors near the magnetic ring (8), an electronic module (3) with at minimum a magnetic field sensor device (9, 10), fitted on said module, and magnetic field concentrators, elements of high magnetic permeability, that take the magnetic field from the inside of the motor where this field is generated, to the sensors located in the electronic module, so that the drive motor (2) to be controlled and the electronic control module (3), with its sensors may form two independent parts.

2. Electronic control device for window-winders and other mechanisms driven by a motor, in accordance with Claim 1 **characterised by** the fact that the field concentrators are located inside the motor (2) and inside the electronic device (3), in which the field concentrators of the two sides, motor and electronics, remain opposite each other, creating a magnetic connection between the two, with an electrical connection by physical contact that powers the motor from the electronic device (3) by means of two or more terminals (16), in which the motor and the electronic module are two closed and independent, couplable components.

3. Electronic control device for window-winders and other motor-driven mechanisms, in accordance with Claim 1, **characterised by** the fact that field concentrators are located only in the motor (2) from the rotor to the exterior of same, with an electrical connection by means of two terminals located in the motor, coupled to another two in the electronic module (3) and with a magnetic connection between the two, in which the motor and the electronic module are two closed and independent components which may be coupled together.

4. Electronic control device for window-winders and other motor-driven mechanisms, in accordance with Claim 1, **characterised by** the fact that the field concentrators are located only in the electronic module (3), with a limited opening in the motor (2) to receive the module and the concentrators, in which said motor and electronic module are open and geometrically couplable, with the two linked electrically by means of terminals.

5. Electronic control device for window-winders and other motor-driven mechanisms, in accordance with Claim 1, **characterised by** the fact that the field concentrators are located between the motor (2) and the electronic module (3) in which the two are also connected by an electrical connection, so that the two may form closed and independent elements, separated by a certain distance.

6. Electronic control device for window-winders and other motor-driven mechanisms, in accordance with Claims 1 and 5, **characterised by** the fact the electric terminals of the motor allow coupling of different interchangeable electronic modules.

7. Electronic control device for window-winders and other motor-driven mechanisms, in accordance with the Claims 1 and 5 **characterised by** the fact that the electric terminals of the motor allow coupling of an additional detachable part as an external connector, for use of the drive motor as a simple conventional electric motor, without electronic control.
